# EUROPEAN PATENT APPLICATION

(11) **EP 3 687 183 A1**
(43) Date of publication of application: **29.07.2020**
(21) Application number: 19802825.0
(22) Date of filing: 19.02.2019
(51) Int. Cl.: H04N 21/43

(54) **VIDEO PICTURE DISPLAY METHOD IN LARGE SCREEN SYSTEM, APPARATUS, AND STORAGE MEDIUM**

(30) Priority: 16.05.2018 CN 201810469203
(71) Applicant: Hangzhou Hikvision System Technology Co., Ltd., Hangzhou, Zhejiang 310051 (CN)
(72) Inventor: SUN, Yongkang, Hangzhou, Zhejiang 310051 (CN); ZHANG, Wenchui, Hangzhou, Zhejiang 310051 (CN); YANG, Xin, Hangzhou, Zhejiang 310051 (CN)
(74) Representative: Rooney, John-Paul
(86) International application number: PCT/CN2019/075495
(87) International publication number: WO 2019/218737

(57) **Abstract**

A method of displaying a video picture in a large screen system, being characterized in that the method comprises: upon receipt of a drag operation on the video picture on a virtual screen, acquiring (301, 401) a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen; when it is determined (402) based on the first position that the dragged video picture needs to be displayed across at least two control devices, determining (302, 403), based on the first position, a display position of the dragged video picture on the display unit controlled by each of the at least two control devices; and sending (303, 404) the display position of the dragged video picture on the display unit controlled by each of the at least two control devices to a corresponding control device, such that each of the at least two control devices controls, based on the received display position, a corresponding display unit to display the video picture.

## Description

This application claims priority of Chinese Patent Application No. 201810469203.3, filed on May 16, 2018 and entitled "METHOD AND DEVICE OF DISPLAYING VIDEO PICTURE IN LARGE SCREEN SYSTEM, AND STORAGE MEDIUM THEREOF", the disclosure of which is hereby entirely incorporated herein by reference.

### TECHNICAL FIELD

The present disclosure relates to the technical field of large screen systems, and in particular, relates to a method and device of displaying a video picture in a large screen system, and a storage medium thereof.

### BACKGROUND

A large screen system is an integral display system formed by display units, control devices, a terminal and the like. Typically, the large screen system includes a plurality of control devices, each of which can control at least one display unit. A plurality of display units controlled by the plurality of control devices form a display screen of the large screen system. A user may perform an operation on a virtual screen on a terminal corresponding to the display screen, such that corresponding video signals are output to the corresponding display units for display on the plurality of control devices.

### SUMMARY

Embodiments of the present disclosure provide a method and device of displaying a video picture in a large screen system, and a computer-readable storage medium thereof, such that display completeness of the video picture is ensured when the video picture is displayed across control devices in the large screen system. The technical solutions are as follows:

In the first aspect, a method of displaying a video picture in a large screen system is provided, comprising:
upon receipt of a drag operation on the video picture on a virtual screen, acquiring a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen;
when it is determined based on the first position that the dragged video picture needs to be displayed across at least two control devices, determining, based on the first position, a display position of the dragged video picture on the display unit controlled by each of the at least two control devices; and
sending the display position of the dragged video picture on the display unit controlled by each of the at least two control device to a corresponding control device, such that each of the at least two control devices controls, based on the received display position, a corresponding display unit to display the video picture.

Optionally, the first position comprises coordinates of four vertexes of the dragged video picture; and
prior to determining, based on the first position, the display position of the dragged video picture on the display unit controlled by each of the at least two control devices, the method further comprises:
acquiring a corresponding display range of each of the plurality of display units on the virtual screen;
determining a display range where coordinates of each of the four vertexes are located from a plurality of display ranges acquired; and
determining that the dragged video picture needs to be displayed across at least two control devices for display when control devices corresponding to the display units corresponding to the display ranges where the coordinates of two vertexes among the four vertexes are located are different.

Optionally, determining, based on the first position, the display position of the dragged video picture on the display unit controlled by each of the at least two control devices comprises:
converting, based on a corresponding relationship between coordinates of the virtual screen and coordinates of the display unit controlled by each of the at least two control devices, the first position to a coordinate system of the display unit controlled by each of the at least two control devices to obtain the display position of the dragged video picture on the display unit controlled by each of the at least two control devices.

Optionally, sending the display position of the dragged video picture on the display unit controlled by each of the at least two control devices to the corresponding control device comprises:
acquiring a control protocol corresponding to each of the at least two control devices; and
sending, under the control protocol corresponding to each of the at least two control devices, the display position of the dragged video picture on the display unit controlled by each of the at least two control devices to the corresponding control device.

Optionally, the method further comprises:
sending a time calibration instruction to each of the plurality of control devices, the time calibration instruction being intended to instruct each of the plurality of control devices to perform time calibration on an internal clock.

In the second aspect, a device of displaying a video picture in a large screen system is provided, comprising:
a first acquiring module, configured to, upon receipt of a drag operation on the video picture on a virtual screen, acquire a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen;
a first determining module, configured to, when it is determined based on the first position that the dragged video picture needs to be displayed across at least two control devices, determine, based on the first position, a display position of the dragged video picture on the display unit controlled by each of the at least two control devices; and
a sending module, configured to send the display position of the dragged video picture on the display unit controlled by each of the at least two control devices to a corresponding control device, such that each of the at least two control devices controls, based on the received display position, a corresponding display unit to display the video picture.

Optionally, the first position comprises coordinates of four vertexes of the dragged video picture; and
the device further comprises:
a second acquiring module, configured to acquire a corresponding display range of each of the plurality of display units on the virtual screen;
a second determining module, configured to determine display ranges where coordinates of each of the four vertexes are located from a plurality of display ranges acquired; and
a third determining module, configured to determine that the dragged video picture needs be displayed across at least two control devices when control devices corresponding to the display units corresponding to the display ranges where the coordinates of two vertexes are located are different.

Optionally, the first determining module is further configured to:
convert, based on a corresponding relationship between coordinates of the virtual screen and coordinates of the display unit controlled by each of the at least two control devices, the first position to a coordinate system of the display unit controlled by each of the at least two control devices to obtain the display position of the dragged video picture on the display unit controlled by each of the at least two control devices.

Optionally, the sending module is further configured to:
acquire a control protocol corresponding to each of the at least two control devices; and
send, under the control protocol corresponding to each of the at least two control devices, the display position of the dragged video picture on the display unit controlled by each of the at least two control devices to the corresponding control device.

Optionally, the device further comprises:
a time calibrating module, configured to send a time calibration instruction to each of the plurality of control devices, the time calibration instruction being intended to instruct each of the plurality of control devices to perform time calibration on an internal clock.

In the third aspect, an apparatus of displaying a video picture in a large screen system is provided, comprising:
a processor; and
a memory for storing instructions executable by the processor;
wherein the processor is configured to execute the executable instructions stored in the memory to perform the method as defined in any one of the first aspect.

In the fourth aspect, a computer-readable storage medium is provided, which stores a computer program; wherein the computer program, when being executed by a processor, causes the processor to perform the method as defined in any one of the first aspect.

The technical solutions according to the embodiments of the present disclosure achieve the following beneficial effects: when a drag operation for a video picture is received on a virtual screen, a first position of the dragged video picture on the virtual screen is acquired; if it is determined based on the first position that the dragged picture needs to be displayed across at least two control devices, the terminal may determine, according to the first position of the dragged video picture on the virtual screen, a display position of the video picture on a display unit controlled by each control device, and then send the determined display position to a corresponding control device; and correspondingly, when the control device controls, according to the received display position, the corresponding display unit to display the video picture, a portion of the video picture in a display range of the video picture on the corresponding display unit may be completely displayed. In this way, the display units controlled by a plurality of control devices each completely display the portion of the video picture in the display range thereof, and by splicing, the entire video picture may be completely displayed. This solves the problem that the video picture is not completely displayed during display of the video picture across the control devices.

### BRIEF DESCRIPTION OF THE DRAWINGS

In order to describe the technical solutions in the embodiments of the present more clearly, the following briefly introduces the accompanying drawings required for describing the embodiments. Apparently, the accompanying drawings in the following description show merely some embodiments of the present disclosure, and a person of ordinary skill in the art may also derive other drawings from these accompanying drawings without creative efforts.
FIG 1 is an architecture diagram of a large screen system according to an embodiment of the present disclosure;
FIG 2 is a schematic structural diagram of terminals for use in a large screen system according to an embodiment of the present disclosure;
FIG 3 is a schematic flowchart of a method of displaying a video picture in a large screen system according to an embodiment of the present disclosure;
FIG 4 is a schematic flowchart of a method of displaying a video picture in a large screen system according to an embodiment of the present disclosure;
FIG 5 is a schematic diagram of displaying a dragged video picture across two control device according to an embodiment of the present disclosure;
FIG 6 is a schematic diagram of displaying the video picture by each control device according to a received display position according to an embodiment of the present disclosure;
FIG 7 is a schematic structural diagram of a device for displaying a video picture in a large screen system according to an embodiment of the present disclosure; and
FIG 8 is a schematic structural diagram of a terminal configured to be used in the large screen system according to an embodiment of the present disclosure.

### DETAILED DESCRIPTION

The present disclosure will be described in further detail with reference to the accompanying drawings, to present the objects, technical solutions, and advantages of the present disclosure more clearly.

In a large screen system, a video picture may be displayed on a display screen formed by a plurality of display units and on a virtual screen of a terminal simultaneously. At present, with respect to a video picture displayed on a target display unit in the display screen, a user may perform a drag operation on the video picture on the virtual screen of the terminal to move the video picture. The target display unit refers to a display unit controlled by a target control device. Upon detection of the drag operation, the terminal can determine a display position of the video picture after the drag operation on the virtual screen, and convert the display position to a coordinate system of the target display unit. Afterwards, the terminal sends the converted display position to the target control device. The target control device can determine a display region according to the received display position, and hence control the video picture to be moved to the display region for display.

However, if the user drags the video picture displayed on the target display unit to a display range of a display unit controlled by another control device, upon determining a display position of the video picture on the virtual screen, the terminal may still convert the display position to the coordinate system of the target display unit and send the display position to the target control device. After the target control device receives the converted display position, when the video picture is displayed according to the display position, a portion of the video picture may exceed the display range of the display unit controlled by the target control device. As a result, the video picture is displayed incompletely. A method of displaying a video picture in a large screen system according to an embodiment of the present disclosure may be applied in the scenario of displaying the video picture across the control devices to solve the problem that the video picture is not displayed incompletely when the video picture is displayed across the control devices.

Hereinafter, system architecture involved in the embodiments of the present disclosure will be described.

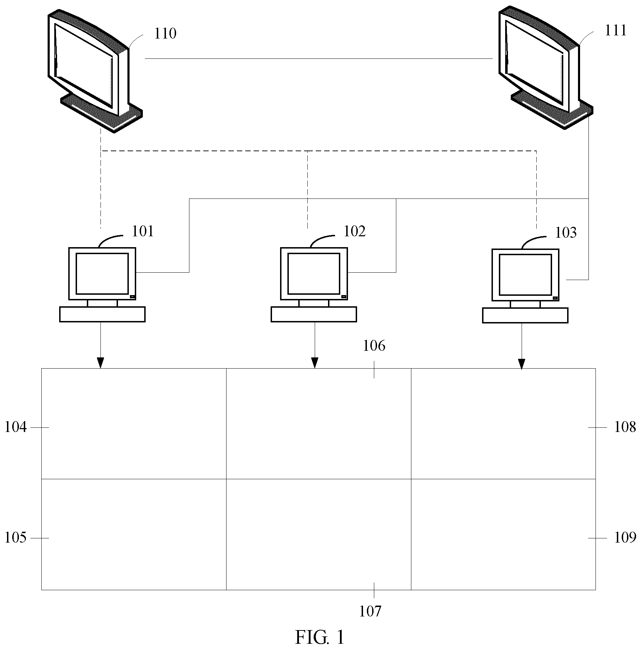

FIG 1 is an architecture diagram of a large screen system according to an embodiment of the present disclosure. As illustrated in FIG 1, the large screen system comprises a plurality of control devices 101 to 103, a plurality of display units 104 to 109, a terminal 110 and a video source 111.

The video source 111 refers to a device which outputs a video signal, such as a monitoring device, a computer device or the like. The video source 111 is connected to the control device 101, the control device 102 and the control device 103, respectively, so as to input the video signal to the control device 101, the control device 102 and the control device 103. The video source 111 may further be connected to the terminal 110 to input the video signal to the terminal 110.

The control devices 101 to 103 can process the received video signal. The control device 101 may communicate with both the display unit 104 and the display unit 105. In this way, the control device 101 may control display of the video picture on the display unit 104 and the display unit 015 according to the processed video signal. The control device 102 may communicate with both the display unit 106 and the display unit 107, to control display of the video picture on the display unit 106 and the display unit 107. The control device 103 may communicate with both the display unit 108 and the display unit 109, to control display of the video picture on the display unit 108 and the display unit 109. The display units 104 to 109 form a display screen in the large screen system.

The terminal 110 communicates with the control device 101, the control device 102 and the control device 103, respectively. In addition, a virtual screen corresponding to the display screen of the large screen system can be displayed on the terminal 110. The terminal 110 may display the video picture on the virtual screen according to the received video signal. A user may operate on the virtual screen. Correspondingly, the terminal may receive an operation instruction from the user, and send a control instruction respectively to the control device 101, the control device 102 and the control device 103 according to the operation instruction. The control device which receives the control instruction may send an instruction to a corresponding display unit according to the control instruction, to control the corresponding display unit to display the video picture according to the instruction.

It should be noted that in the above system architecture, a possible quantity of control devices is merely illustrated, and in addition, a quantity of display units controlled by each control device is also exemplarily given, which cannot be construed as any specific limitation to the quantity of control devices and the quantity of display units in the large screen system.

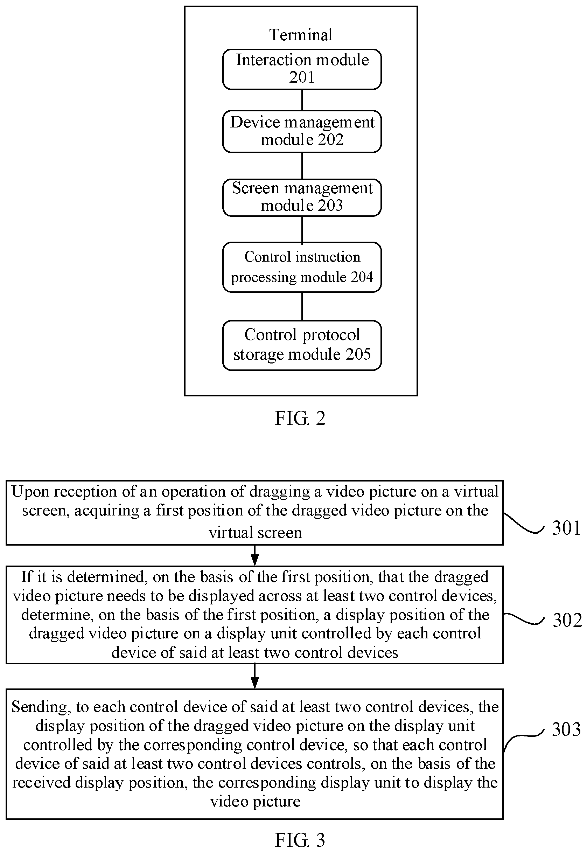

As known from the system architecture as illustrated in FIG 1, the terminal 110 may send a control instruction to a control device according to the user operation, such that the control device controls display of the video picture on the corresponding display unit according to the control instruction. Based on this, as illustrated in FIG 2, a schematic structural diagram of a terminal is provided according to an embodiment of the present disclosure. The functions of the terminal 110 as illustrated in FIG 1 can be implemented by the terminal as illustrated in FIG 2. As illustrated in FIG 2, the terminal comprises an interaction module 201, a device management module 202, a screen management module 203, a control instruction processing module 204 and a control protocol storage module 205.

The interaction module 201 is configured to display the virtual screen corresponding to the display screen of the large screen system, and receive the operation instruction that is triggered when the user performs a user operation on the virtual screen.

The device management module 202 is configured to manage device information of each control device connected to the terminal, and is responsible to a time calibration instruction to each control device such that each control device perform uniform time calibration according to the time calibration instruction.

The screen management module 203 is configured to manage information of the display unit controlled by each of the plurality of control devices. Specifically, the screen management module 203 may store a corresponding relationship between each of the plurality of control devices and the display unit controlled by each control device. In addition, the screen management module 203 may further store a coordinate range corresponding to a display range of the display unit controlled by each control device on the virtual screen.

The control instruction processing module 204 is configured to process the operation instruction received by the interaction module 201 to obtain a device control instruction. In addition, the control instruction processing module 204 may calculate the position of a video picture on each the display unit controlled by each of the control device according to the position of the video picture on the virtual screen.

The control protocol storage module 205 stores a control protocol of each control device connected to the terminal, and may encapsulate the control protocol of each control device.

Hereinafter, a method of displaying a video picture on a large screen system according to an embodiment of the present disclosure will be described.

Before a video picture is displayed through the method according to the embodiment of the present disclosure, a user may firstly complete related configurations on a terminal. Specifically, the terminal may display device identifiers of control devices that are currently detected for the user. The user may select the device identifiers of a plurality of control devices to be connected. Upon receipt of a selection instruction from the user, the terminal may be connected to the plurality of control devices selected by the user, and store device information of the plurality of control devices. Afterwards, the terminal may send a time calibration instruction to the plurality of control devices, such that time of the plurality of control devices is uniformly calibrated to ensure synchronous outputs of the plurality of control devices. Then, the terminal may create a virtual screen according to a display screen formed by display units controlled by the plurality of control devices, wherein coordinates on the virtual screen is in one-to-one correspondence to coordinates on the display screen. And next, the terminal can establish a mapping relationship between the display units controlled by the plurality of control devices and the virtual screen, such that the display position of the video picture on the corresponding display unit is calculated according to the position of the video picture on the virtual screen.

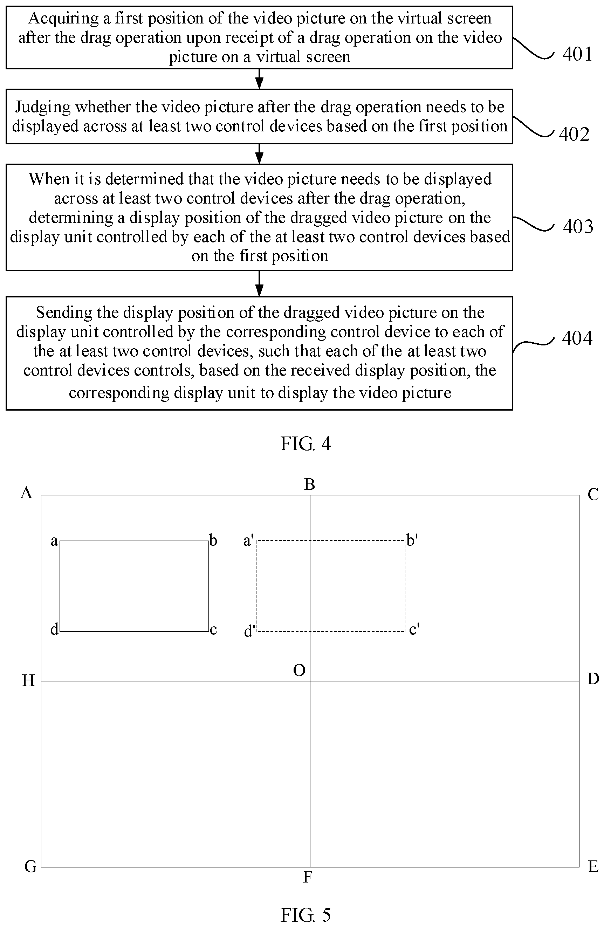

Upon completion of the above configurations, the user may select a designated video signal, and the terminal may display the video picture according to the designated video signal selected by the user. Afterwards, the terminal may detect a drag operation performed by the user on the video picture, such that when the drag operation is detected, the video picture is displayed according to the method according to the embodiment as illustrated in FIG 3 and FIG 4.

FIG 3 is a schematic flowchart of a method of displaying a video picture in a large screen system according to an embodiment of the present disclosure. The method may be applied to the terminal as illustrated in FIG 1 and FIG 2. The method comprises the following steps:
Step 301: Upon receipt of a drag operation on the video picture on a virtual screen, a first position of the dragged video picture on the virtual screen is acquired.

The coordinates on the virtual screen is in one-to-one correspondence to the coordinates on the display screen of the large screen system. The large screen system comprises a plurality of control devices and a plurality of display units. Each of the plurality of control devices controls at least one display unit. The plurality of display units form the display screen.

Step 302: If it is determined based on the first position that the dragged video picture needs to be displayed across at least two control devices, a display position of the dragged video picture on the display unit controlled by each of the at least two control devices is determined based on the first position.

Step 303: The display position of the dragged video picture on the display unit controlled by the corresponding control device is sent to each of the at least two control devices, such that each of the at least two control devices controls, based on the received display position, the corresponding display unit to display the video picture.

In the embodiment of the present disclosure, when a drag operation on a video picture is received on a virtual screen, a first position of the video picture on the virtual screen after the drag operation is acquired; if it is determined based on the first position that the dragged video picture needs to be displayed across at least two control devices, the terminal may determine, according to the first position of the video picture on the virtual screen after the drag operation, a display position of the video picture on a display unit controlled by each control device, and then send the determined display position to a corresponding control device; and when the corresponding control device controls, according to the received display position, the corresponding display unit to display the video picture, a portion of the video picture in a display range of the video picture on the corresponding display unit may be completely displayed. In this way, the display units controlled by a plurality of control devices each completely display the portion of the video picture in the display range thereof, and the entire video picture may be completely displayed by splicing. This solves the problem that the video picture is not completely displayed during display of the video picture across a plurality of control devices.

FIG 4 is a schematic flowchart of a method of displaying a video picture in a large screen system according to an embodiment of the present disclosure. The method can be applied to the terminal as illustrated in FIG 1 and FIG 2. As illustrated in FIG 4, the method comprises the following steps:
Step 401: Upon receipt of a drag operation on the video picture on a virtual screen, a first position of the video picture on the virtual screen after the drag operation is acquired.

In the embodiment of the present disclosure, upon receipt of the drag operation on the currently displayed video picture on the virtual screen, the terminal may acquire the first position of the video picture on the virtual screen after the drag operation. The first position can indicate a display region of the video picture on the virtual screen. For example, the first position may be coordinates of four vertexes of the video picture, and a size of a display region occupied by the video picture on the virtual screen and a position of the display region on the virtual screen can be determined according to the coordinates of the four vertexes.

It should be noted that the first position may further be other information for indicating the display position of the video picture on the virtual screen and the display region occupied by the video picture. For example, the first position may a coordinate range of the display region occupied by the video picture on the virtual screen. Alternatively, when the video picture is a rectangle, if the terminal knows the size of the video picture, the first position may further be coordinates of a center point of the video picture. The embodiment of the present disclosure sets no limitation thereon.

Step 402: Whether the video picture after the drag operation needs to be displayed across at least two control devices is judged based on the first position.

After the first position of the video picture on the virtual screen after the drag operation is determined, the terminal may judge, based on the first position, whether the video picture needs to be displayed across at least two control devices after the drag operation. Displaying the video picture across at least two control devices means that the display range of the video picture is on at least two display units, and the at least two display units are not controlled by the same control device.

Exemplarily, in the embodiment of the present disclosure, when the first position comprises the coordinates of the four vertexes of the video picture, the terminal can acquire a display range of each of a plurality of display units on the virtual screen, determine a display range from the acquired plurality of display ranges in which the coordinates of each of the four vertexes is located, and determine that the video picture needs to be displayed across at least two control devices after the drag operation when the display units corresponding to the display ranges in which the coordinates of two vertexes among the four vertexes are located correspond to different control devices.

Based on the introduction to the system architecture, the large screen system can comprise a plurality of control devices, and each control device may control at least one display unit. In the embodiment of the present disclosure, the terminal stores a corresponding display range of each of a plurality of display units controlled by each of a plurality of control devices on the virtual screen. Therefore, the terminal may acquire the corresponding display range of each display unit on the virtual screen. Afterwards, the terminal may determine a display range from the acquired display ranges in which each of the four vertexes is located. Since each display unit has its respective display range, after the display range in which each vertex is located is determined, the specific display unit where each of the four vertexes is located is determined.

Upon determining the display range in which each vertex is located, the terminal may compare the determined display ranges in which the four vertexes are located respectively. If the display ranges in which the coordinates of the four vertexes are located are the same, it indicates that the four vertexes are located on the same display units. Since a display unit corresponds to a control device, in this case, it can be determined that the video picture does not need to be displayed across the control devices after the drag operation.

If the display ranges in which the coordinates of any two vertexes are located are different, it indicates that two vertexes of the four vertexes are located on different display units. In this case, the terminal may further judge whether the control devices corresponding to the two display units are the same. If the control devices corresponding to the two display units are the same, it indicates that the video picture does not need to be displayed across the control devices after the drag operation. If the control devices corresponding to the two display units are not the same, it may be determined that the video picture needs to be displayed across at least two control devices after the drag operation.

Hereinafter, how the terminal judges whether the video picture needs to be displayed across at least two control devices after the drag operation will be described through a specific example.

Assuming that the current terminal is connected to two control devices, wherein a control device 1 controls display units 1 and 2, and a control device 2 controls display units 3 and 4. As illustrated in FIG 5, a display range corresponding to the display unit 1 on the virtual screen is a rectangle ABOH, and a display range corresponding to the display unit 2 on the virtual screen is a rectangle HOFG, and a display range corresponding to the display unit 3 on the virtual screen is BCDO, and a display range corresponding to the display unit 4 is a rectangle ODEF. At first, a video picture is displayed on the display unit 1 controlled by the control device 1, that is, displayed in the display range ABOH on the virtual screen, as illustrated by the solid line block in FIG 5. Then, the user drags the video picture through performing a drag operation in the virtual screen. A position of the video picture on the virtual screen after the drag operation is illustrated by the dashed line block in FIG 5. The terminal may determine display ranges in which a', b', c' and d' are located respectively. a' is in the display range ABOH, that is, a' is located on the display unit 1, and b' is in the display range BCDO, that is, b' is located on the display unit 3. c' is in the display range BCDO, that is, c' is also located in the display unit 3. d' is in the display range ABOH, that is, d' is located in the display unit 1. Accordingly, a' and d' are located on the same display unit, and b' and c' are located on another display unit, and the two display units correspond to different control devices. In this case, it may be determined that the video picture needs to be displayed across at least two control devices after the drag operation.

Step 403: If it is determined that the video picture needs to be displayed across at least two control devices after the drag operation, a display position of the dragged video picture on the display unit controlled by each of the at least two control devices is determined based on the first position.

When it is determined that the video picture needs to be displayed across at least two control devices after the drag operation, the terminal may convert the first position to a coordinate system of the display unit controlled by each of the at least two control devices based on a corresponding relationship between the virtual screen and the coordinates of the display unit controlled by each of the at least two devices, and hence obtain a display position of the video picture on the display unit controlled by each of the at least two control devices after the drag operation.

Exemplarily, with respect to each of a plurality of control devices, the control device can establish a coordinate system for at least one display unit controlled thereby, wherein the coordinate system can be referred to as a control device coordinate system. In addition, the terminal can further establish a virtual screen coordinate system for the virtual screen. As such, the terminal can store a conversion relationship between the virtual screen coordinate system and each control device coordinate system. The conversion relationship can be taken as a corresponding relationship between the virtual screen and the coordinates of the display unit controlled by each control device. In this way, with respect to coordinates of any point on the virtual screen, the terminal can determine and obtain corresponding coordinates of the coordinates in each control device coordinate system according to the conversion relationship between the virtual screen coordinate system and each control device coordinate system.

Accordingly, with respect to each of the at least two control devices across which the dragged video picture is displayed, the terminal can convert the coordinates of the four vertexes included in the first position to each control device coordinate system according to the conversion relationship between the virtual screen coordinate system and each control device coordinate system, and hence obtain a display position of the first position on the display unit controlled by each control device.

Hereinafter, how the terminal determines, according to the first position, the display position of the dragged video picture on the display unit controlled by each of the at least two control devices is described by a specific example.

Still taking FIG 5 as an example, the dragged video picture needs to be displayed across the control device 1 and the control device 2. The control device 1 can establish a first control device coordinate system for the display unit 1 and the display unit 2, and the control device 2 can establish a second control device coordinate system for the display unit 3 and the display unit 4. The terminal stores a conversion relationship between the virtual screen coordinate system and the first control device coordinate system, and a conversion relationship between the virtual screen coordinate system and the second control device coordinate system. The four vertexes of the video picture are respectively a', b', c' and d'. The terminal may convert the coordinates of a', b', c' and d' to the first control device coordinate system according to the conversion relationship between the virtual screen coordinate system and the first control device coordinate system, wherein the four converted coordinates are the display position of the dragged video picture on the display units controlled by the control device 1. Meanwhile, the terminal can convert the coordinates of a', b', c' and d' to the second control device coordinate system according to the conversion relationship between the virtual screen coordinate system and the second control device coordinate system, wherein the four converted coordinates are the display position of the dragged video picture on the display units controlled by the control device 2.

Step 404: The display position of the dragged video picture on the display unit controlled by the corresponding control device is sent to each of the at least two control devices.

Upon determining the display position of the dragged video picture on the display unit controlled by each control device, the terminal can send the corresponding display position to the corresponding control device, such that each of the at least two control devices controls, based on the received display position, the corresponding display unit to display the video picture.

Exemplarily, after the terminal determines and obtains the coordinates of the coordinates of the four vertexes of the first position in each control device coordinate system according to the conversion relationship between the virtual screen coordinate system and each control device coordinate system, the terminal can send the determined coordinates corresponding to the four vertexes to the corresponding control devices respectively.

For example, the terminal can send the coordinates of the four vertexes in the first control device coordinate system of the control device 1 to the control device 1, and send the coordinates of the four vertexes in the second control device coordinate system of the control device 2 to the control device 2.

It should be noted that since the plurality of control devices in the large screen system may be provided by different vendors, or are different models of control devices, in this case, different control devices may support different control protocols. Accordingly, the terminal can store the control protocol corresponding to each control device. In this way, when the terminal sends the corresponding display positions to the control devices, the terminal may firstly acquire the control protocol of each control device, and then send the corresponding display position to the corresponding control device according to the acquired control protocol corresponding to each control device.

For example, when the terminal sends the coordinates of the four vertexes in the first control device coordinate system of the control device 1 to the control device 1, the terminal may acquire the control protocol of the control device 1, and then sends the coordinates according to the control protocol of the control device 1. Likewise, when the terminal sends the coordinates of the four vertexes in the second control device coordinate system of the control device 2, the terminal may acquire the control protocol of the control device 2, and then sends the coordinates according to the control protocol of the control device 2.

Upon receiving the coordinates of the four vertexes in the corresponding control device coordinate system from the terminal, each control device can control the video picture to be displayed on the corresponding position according to the received coordinates. Since the video picture is displayed across the control devices, when each control device controls the video picture to be displayed according to the received coordinates, in practice, coordinates of a portion of the video picture are not in the display range of the corresponding control device. However, the portion of the video picture that is not in the display range can be controlled by another control device for display. In this way, when the at least two control devices both controls the video picture to be displayed according to the received coordinates, the portions displayed by each of the control devices are spliced to form an integral video picture. Hence, the video picture is completely and entirely displayed across the control devices.

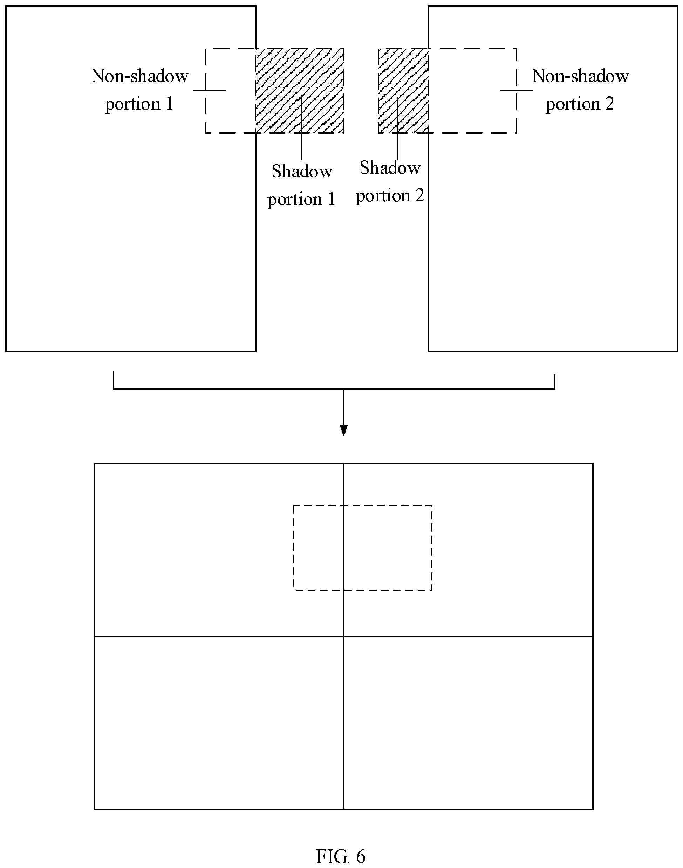

Description is given still by taking the example depicted in FIG 5 as an example. FIG 6 is a schematic diagram in which each control device performs video picture display according to the received display position. As illustrated in FIG 6, when the control device 1 controls the video picture to be displayed according to the received coordinates, as illustrated in the upper left part in FIG 6, a shadow portion 1 is out of the display range of the control device 1. Therefore, the control device 1 controls the video picture to be displayed on the controlled display unit according to the received coordinates, only a non-shadow portion 1 can be displayed, whereas the shadow portion 1 fails to be displayed because this portion goes beyond the display range of the display unit controlled by the control device 1. When the control device 2 controls the video picture to be displayed according to the received coordinates, as illustrated in the upper right part in FIG 6, since a shadow portion 2 is out of the display range of the display unit controlled by the control device 2, the display unit controlled by the control device 2 fails to display the shadow portion 2, and only displays a non-shadow portion 2. In this way, on the display screen of the large screen system, the entire video picture is obtained by splicing the portion of the video picture (that is, the non-shadow portion 1) displayed under control of the control device 1 and the portion of the video picture (that is, the non-shadow portion 2) displayed under control of the control device 2, as illustrated in FIG 6.

Optionally, upon sending the corresponding display position to each control device, the terminal can meanwhile send a time calibration instruction to each control device again simultaneously, such that each control device is capable of perform uniform time calibration according to the time calibration instruction upon receipt of the time calibration instruction. In this way, each control device can control the display unit to display the video picture at the same time according to the received display position.

In the embodiment of the present disclosure, when a drag operation for a video picture is received on a virtual screen, a first position of the dragged video picture on the virtual screen is acquired; when it is determined based on the first position that the dragged picture is required to be displayed across at least two control devices, the terminal can determine, according to the first position of the dragged video picture on the virtual screen, a display position of the video picture on a display unit controlled by each control device, and then send the determined display position to a corresponding control device; and correspondingly, when the control device controls, according to the received display position, the corresponding display unit to display the video picture, a portion of the video picture in a display range of the corresponding display unit can be entirely displayed. In this way, the display units controlled by a plurality of control devices each entirely display the portion of the video picture in the display range thereof, and by splicing, the entire video picture may be completely displayed. This solves the problem that the video picture is not entirely displayed during display of the video picture across the control devices.

Hereinafter, a device of displaying a video picture on a large screen system according to an embodiment of the present disclosure is described.

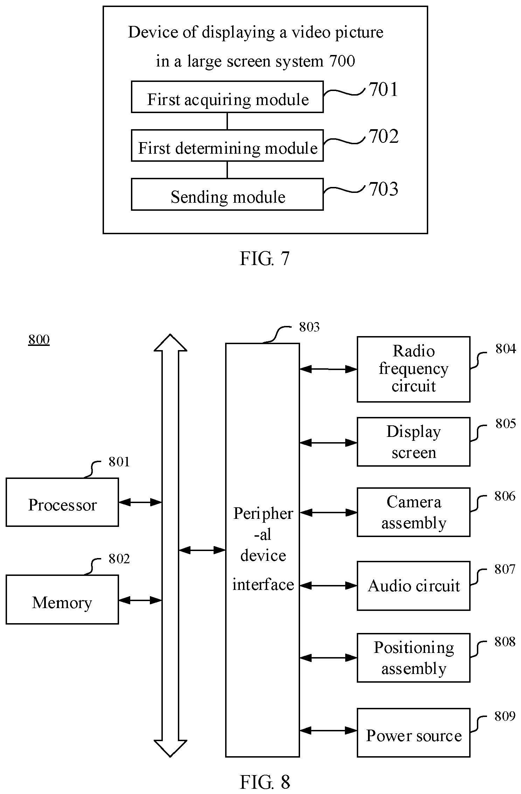

Referring to FIG 7, various embodiments of the present disclosure provides a schematic structural diagram of a device of displaying a video picture in a large screen system 700. The device 700 comprises:
a first acquiring module 701, configured to, upon receipt of a drag operation on the video picture on a virtual screen, acquire a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen;
a first determining module 702, configured to, when it is determined based on the first position that the dragged video picture needs to be displayed across at least two control devices, determine, based on the first position, a display position of the dragged video picture on the display unit controlled by each of the at least two control devices; and
a sending module 703, configured to send the display position of the dragged video picture on the display unit controlled by the corresponding control device to each of the at least two control devices, such that each of the at least two control devices controls, based on the received display position, the corresponding display unit to display the video picture.

Optionally, the first position comprises coordinates of four vertexes of the dragged video picture; and
the device 700 further comprises:
a second acquiring module, configured to acquire a corresponding display range of each of the plurality of display units on the virtual screen;
a second determining module, configured to determine a display range where coordinates of each of the four vertexes are located from a plurality of display ranges acquired; and
a third determining module, configured to determine that the dragged video picture needs to be displayed across at least two control devices when control devices corresponding to the display units corresponding to the display ranges where the coordinates of two vertexes among the four vertexes are located are different.

Optionally, the first determining module 702 is further configured to:
convert, based on a corresponding relationship between the virtual screen and coordinates of the display unit controlled by each of the at least two control devices, the first position to a coordinate system of the display unit controlled by each of the at least two control devices, so as to obtain the display position of the dragged video picture on the display unit controlled by each of the at least two control devices.

Optionally, the sending module 703 is specifically configured to:
acquire a control protocol corresponding to each of the at least two control devices; and
send, under the control protocol corresponding to each of the at least two control devices, the display position of the dragged video picture on the display unit controlled by the corresponding control device to each of the at least two control devices.

Optionally, the device 700 further comprises:
a time calibrating module, configured to send a time calibration instruction to each of the plurality of control devices, the time calibration instruction being intended to instruct each of the plurality of control devices to perform time calibration on an internal clock thereof.

In summary, in the embodiment of the present disclosure, when a drag operation on a video picture is received on a virtual screen, a first position of the dragged video picture on the virtual screen is acquired; when it is determined based on the first position that the dragged picture needs to be displayed across at least two control devices, the terminal can determine, according to the first position of the dragged video picture on the virtual screen, a display position of the video picture on a display unit controlled by each control device, and then send the determined display position to a corresponding control device; and correspondingly, when the control device controls, according to the received display position, the corresponding display unit to display the video picture, a portion of the video picture in a display range of the video picture on the corresponding display unit may be completely displayed. In this way, the display units controlled by a plurality of control devices each completely display the portion of the video picture in the display range thereof, and by splicing, the entire video picture can be completely displayed. This solves the problem that the video picture is not entirely displayed during display of the video picture across the control devices.

It should be noted that, during displaying of the video picture by the device of displaying the video picture in the large screen system according to the above embodiments, the device is described by only using division of the above functional modules as examples. In practice, the functions may be assigned to different functional modules for implementation as required. To be specific, the internal structure of the device is divided into different functional modules to implement all or part of the above-described functions. In addition, the device of displaying the video picture in the large screen system according to the above embodiments is based on the same inventive concept as the method of displaying the video picture in the large screen system according to the embodiments of the present invention. The specific implementation is elaborated in the method embodiments, which is not described herein any further.

FIG 8 is a schematic structural block diagram a terminal 800 for use in requesting webpage information according to an exemplary embodiment of the present disclosure. The terminal 800 may be a smart phone, a tablet computer, a lap-top computer or a desktop computer. The terminal 800 may also be referred to as a user equipment, a portable terminal, a laptop terminal, a desktop terminal or the like.

Generally, the terminal 800 comprises a processor 801 and a memory 802.

The processor 801 may comprise one or a plurality of processing cores, for example, a four-core processor, an eight-core processor or the like. The processor 801 can be implemented in a hardware form of at least one of digital signal processing (DSP), field-programmable gate array (FPGA), and programmable logic array (PLA). The processor 801 can further comprise a primary processor and a secondary processor. The primary processor is a processor configured to process data in an active state, and is also referred to as a central processing unit (CPU); and the secondary processor is a low-power consumption processor configured to process data in a standby state. In some embodiments, the processor 801 can be integrated with a graphics processing unit (GPU), wherein the GPU is configured to render and draw content to be displayed on the screen. In some embodiments, the processor 801 can further comprise an artificial intelligence (AI) processor, wherein the AI processor is configured to process calculating operations related to machine learning.

The memory 802 can comprise one or a plurality of computer-readable storage media, wherein the computer-readable storage medium can be non-transitory. The memory 802 can comprise a high-speed random access memory, and a non-volatile memory, for example, one or a plurality of magnetic disk storage devices or flash storage devices. In some embodiments, the non-transitory computer-readable storage medium in the memory 802 can be configured to store at least one instruction, wherein the at least one instruction is executed by the processor 801 to perform the method of displaying a video picture in a large screen system according to the embodiments of the present disclosure.

In some embodiments, the terminal 800 can optionally comprise a peripheral device interface 803 and at least one peripheral device. The processor 801, the memory 802 and the peripheral device interface 803 can be connected to each other via a bus or a signal line. The at least one peripheral device can be connected to the peripheral device interface 803 via a bus, a signal line or a circuit board. Specifically, the peripheral device comprises at least one of a radio frequency circuit 804, a touch display screen 805, a camera assembly 806, an audio circuit 807, a positioning assembly 808 and a power source 809.

The peripheral device interface 803 can be configured to connect the at least one peripheral device related to input/output (I/O) to the processor 801 and the memory 802. In some embodiments, the processor 801, the memory 802 and the peripheral device interface 803 are integrated on the same chip or circuit board. In some other embodiments, any one or two of the processor 801, the memory 802 and the peripheral device interface 803 can be implemented on an individual chip or circuit board, which is not limited in this embodiment.

The radio frequency circuit 804 is configured to receive and transmit a radio frequency (RF) signal, which is also referred to as an electromagnetic signal. The radio frequency circuit 804 communicates with a communication network or another communication device via the electromagnetic signal. The radio frequency circuit 804 converts an electrical signal to an electromagnetic signal and sends the electromagnetic signal, or converts a received electromagnetic signal to an electrical signal. Optionally, the radio frequency circuit 804 comprises an antenna system, an RF transceiver, one or a plurality of amplifiers, a tuner, an oscillator, a digital signal processor, a codec chip set, a subscriber identification module card or the like. The radio frequency circuit 804 can communicate with another terminal under a wireless communication protocol. The wireless communication protocol comprises, but not limited to: a world wide web, a metropolitan area network, an intranet, various generations of mobile communication networks (comprising 2G, 3G, 4G and 5G), a wireless local area network and/or a wireless fidelity (WiFi) network. In some embodiments, the radio frequency circuit 804 can further comprise a near field communication (NFC)-related circuits, which is not limited in the present disclosure.

The display screen 805 can be configured to display a user interface (UI). The UE can comprise graphics, texts, icons, videos and any combination thereof. When the display screen 805 is a touch display screen, the display screen 805 can further have the capability of acquiring a touch signal on a surface of the display screen 805 or above the surface of the display screen 805. The touch signal may be input to the processor 801 as a control signal for further processing. In this case, the display screen 805 can be further configured to provide a virtual button and/or a virtual keyboard or keypad, also referred to as a soft button and/or a soft keyboard or keypad. In some embodiments, one display screen 805 can be provided, which is arranged on a front panel of the terminal 800. In some other embodiments, at least two display screens 805 are provided, which are respectively arranged on different surfaces of the terminal 800 or designed in a folded manner. In still some other embodiments, the display screen 805 can be a flexible display screen, which is arranged on a bent surface or a folded surface of the terminal 800. Even, the display screen 805 may be further arranged as an irregular pattern which is non-rectangular, that is, a specially-shaped screen. The display screen 805 can be fabricated from such materials as a liquid crystal display (LCD), an organic light-emitting diode (OLED) and the like.

The camera assembly 806 is configured to capture an image or a video. Optionally, the camera assembly 806 comprises a front camera and a rear camera. Generally, the front camera is arranged on a front panel of the terminal, and the rear camera is arranged on a rear side of the terminal. In some embodiments, at least two rear cameras are arranged, which are respectively any one of a primary camera, a depth of field (DOF) camera, a wide-angle camera and a long-focus camera, such that the primary camera and the DOF camera are fused to implement a background virtualization function, and the primary camera and the wide-angle camera are fused to implement the panorama photographing and virtual reality (VR) photographing functions or other fused photographing functions. In some embodiments, the camera assembly 806 can further comprise a flash. The flash can be a single-color temperature flash or a double-color temperature flash. The double-color temperature flash refers to a combination of a warm-light flash and a cold-light flash, which can be used for light compensation under different color temperatures.

The audio circuit 807 can comprise a microphone and a speaker. The microphone is configured to capture an acoustic wave of a user and an environment, and convert the acoustic wave to an electrical signal and output the electrical signal to the processor 801 for further processing, or output the electrical signal to the radio frequency circuit 804 to achieve voice communication. For the purpose of stereo capture or noise reduction, a plurality of such microphones can be provided, which are respectively arranged at different positions of the terminal 800. The microphone can also be a microphone array or an omnidirectional capturing microphone. The speaker is configured to convert an electrical signal from the processor 801 or the radio frequency circuit 804 to an acoustic wave. The speaker can be a traditional thin-film speaker, or may be a piezoelectric ceramic speaker. When the speaker is a piezoelectric ceramic speaker, an electrical signal can be converted to an acoustic wave audible by human beings, or an electrical signal can be converted to an acoustic wave inaudible by human beings for the purpose of ranging or the like. In some embodiments, the audio circuit 807 may further include a headphone jack.

The positioning assembly 808 is configured to determine a current geographical position of the terminal 800 to achieve navigation or a local based service (LBS). The positioning assembly 808 can be a positioning assembly based on the global positioning system (GPS) from the United States, the Beidou positioning system from China, or the Galileo satellite navigation system from Russia.

The power source 809 is configured to supply power for the components of the terminal 800. The power source 809 may be an alternating current, a direct current, a disposable battery or a rechargeable battery. When the power source 809 comprises a rechargeable battery, the rechargeable battery can support wired charging or wireless charging. The battery supporting wired charging is a battery that is chargeable by wired charging, and the battery supporting wireless charging is a battery that is chargeable by wireless charging. The rechargeable battery can further support the supercharging technology.

A person skilled in the art can understand that the structure of the terminal as illustrated in FIG 8 cannot be construed as a limitation to the terminal 800. The terminal can comprise more or less components over those illustrated in FIG 8, or combinations of some components, or employ different component deployments.

The memory further comprises at least one program, wherein the at least one program is stored in the memory and is executable by the CPU. The at least one program comprises instructions for performing the method of displaying the video picture in the large screen system according to the embodiment of the present disclosure.

An embodiment of the present disclosure further provides a non-volatile computer-readable storage medium which stores instructions. The instructions, when being executed by a processor of a terminal, cause the terminal to perform the related steps in the method of requesting webpage information according to the embodiment as illustrated in FIG 1 or FIG 3.

An embodiment of the present disclosure further provides a computer program product comprising instructions. The instructions, when being run on a computer, causes the computer to perform the step of the method of displaying the video picture in the large screen system performed by a terminal according to the embodiment as illustrated in FIG 1 or FIG 3.

Persons of ordinary skill in the art can understand that all or part of the steps described in the above embodiments can be performed through hardware, or through relevant hardware instructed by applications stored in a non-transitory computer readable storage medium, such as a read-only memory, a disk or a CD, etc.

The foregoing descriptions are merely exemplary embodiments of the present disclosure, and are not intended to limit the present disclosure. Within the spirit and principles of the disclosure, any modifications, equivalent substitutions, improvements, etc., are within the protection scope of the present disclosure.

## Claims

1. A method of displaying a video picture in a large screen system, comprising:
upon receipt of a drag operation on the video picture on a virtual screen, acquiring a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen;
when it is determined based on the first position that the dragged video picture needs to be displayed across at least two control devices, determining, based on the first position, a display position of the dragged video picture on the display unit controlled by each of the at least two control devices; and
sending the display position of the dragged video picture on the display unit controlled by each of the at least two control devices to a corresponding control device, such that each of the at least two control devices controls, based on the received display position, a corresponding display unit to display the video picture.

2. The method according to claim 1, wherein the first position comprises coordinates of four vertexes of the dragged video picture; and
prior to determining, based on the first position, the display position of the dragged video picture on the display unit controlled by each of the at least two control devices, the method further comprises:
acquiring a corresponding display range of each of the plurality of display units on the virtual screen;
determining a display range where coordinates of each of the four vertexes are located from a plurality of display ranges acquired; and
determining that the dragged video picture needs to be displayed across at least two control devices when control devices corresponding to the display units corresponding to the display ranges where the coordinates of two vertexes among the four vertexes are located are different.

3. The method according to claim 1, wherein determining, based on the first position, the display position of the dragged video picture on the display unit controlled by each of the at least two control devices comprises:
converting, based on a corresponding relationship between coordinates of the virtual screen and coordinates of the display unit controlled by each of the at least two control devices, the first position to a coordinate system of the display unit controlled by each of the at least two control devices to obtain the display position of the dragged video picture on the display unit controlled by each of the at least two control devices.

4. The method according to claim 1, wherein sending the display position of the dragged video picture on the display unit controlled by each of the at least two control devices to the corresponding control device comprises:
acquiring a control protocol corresponding to each of the at least two control devices; and
sending, under the control protocol corresponding to each of the at least two control devices, the display position of the dragged video picture on the display unit controlled by each of the at least two control devices to the corresponding control device .

5. The method according to any one of claims 1 to 4, further comprising:
sending a time calibration instruction to each of the plurality of control devices, the time calibration instruction being intended to instruct each of the plurality of control devices to perform time calibration on an internal clock.

6. A device of displaying a video picture in a large screen system, comprising:
a first acquiring module, configured to, upon receipt of a drag operation on the video picture on a virtual screen, acquire a first position of the dragged video picture on the virtual screen, coordinates on the virtual screen being in one-to-one correspondence to coordinates on a display screen of the large screen system, the large screen system comprising a plurality of control devices and a plurality of display units, each of the plurality of control devices controlling at least one display unit, the plurality of display units forming the display screen;
a first determining module, configured to, when it is determined based on the first position that the dragged video picture needs to be displayed across at least two control devices, determine, based on the first position, a display position of the dragged video picture on the display unit controlled by each of the at least two control devices; and
a sending module, configured to send the display position of the dragged video picture on the display unit controlled by each of the at least two control devices to a corresponding control device, such that each of the at least two control devices controls, based on the received display position, a corresponding display unit to display the video picture.

7. The device according to claim 6, wherein the first position comprises coordinates of four vertexes of the dragged video picture;
the device further comprises:
a second acquiring module, configured to acquire a corresponding display range of each of the plurality of display units on the virtual screen;
a second determining module, configured to determine display ranges where coordinates of each of the four vertexes are located from a plurality of display ranges acquired; and
a third determining module, configured to determine that the dragged video picture needs to be displayed across at least two control devices when control devices corresponding to the display units corresponding to the display ranges where the coordinates of two vertexes are located are different.

8. The device according to claim 6, where the first determining module is further configured to:
convert, based on a corresponding relationship between coordinates of the virtual screen and coordinates of the display unit controlled by each of the at least two control devices, the first position to a coordinate system of the display unit controlled by each of the at least two control devices to obtain the display position of the dragged video picture on the display unit controlled by each of the at least two control devices.

9. The device according to claim 6, where the sending module is further configured to:
acquire a control protocol corresponding to each of the at least two control devices; and
send, under the control protocol corresponding to each of the at least two control devices, the display position of the dragged video picture on the display unit controlled by each of the at least two control devices to the corresponding control device.

10. The device according to any one of claims 6 to 9, further comprising:
a time calibrating module, configured to send a time calibration instruction to each of the plurality of control devices, the time calibration instruction being intended to instruct each of the plurality of control devices to perform time calibration on an internal clock.

11. An apparatus of displaying a video picture in a large screen system, comprising:
a processor; and
a memory for storing instructions executable by the processor;
wherein the processor is configured to execute the executable instructions stored in the memory to perform the method as defined in any one of claims 1 to 5.

12. A computer-readable storage medium, which stores a computer program; wherein the computer program, when being executed by a processor, causes the processor to perform the method as defined in any one of claims 1 to 5.
